# EUROPEAN PATENT SPECIFICATION

(11) **EP 4 458 464 B1**
(45) Date of publication and mention of the grant of the patent: **21.01.2026**
(21) Application number: 22928823.8
(22) Date of filing: 06.09.2022
(51) Int. Cl.: B01J 29/76, B01D 53/94, B01J 35/00, F01N 3/28, B01J 23/63, B01J 37/02, F01N 3/08, F01N 3/10

(54) **GASOLINE ENGINE EXHAUST GAS PURIFICATION CATALYST AND EXHAUST GAS PURIFICATION SYSTEM USING SAME**
ABGASREINIGUNGSKATALYSATOR FÜR BENZINMOTOR UND ABGASREINIGUNGSSYSTEM DAMIT
CATALYSEUR DE PURIFICATION DE GAZ D'ÉCHAPPEMENT DE MOTEUR À ESSENCE ET SYSTÈME DE PURIFICATION DE GAZ D'ÉCHAPPEMENT L'UTILISANT

(30) Priority: 25.02.2022 JP 2022028512
(43) Date of publication of application: 06.11.2024
(73) Proprietor: CATALER CORPORATION, Kakegawa-shi, Shizuoka 437-1492 (JP)
(72) Inventor: OGAWA, Ryoichi, Kakegawa-shi, Shizuoka 437-1492 (JP); OHASHI, Tatsuya, Kakegawa-shi, Shizuoka 437-1492 (JP)
(74) Representative: Kramer Barske Schmidtchen Patentanwälte PartG mbB
(86) International application number: PCT/JP2022/033405
(87) International publication number: WO 2023/162302

(56) References cited:
- WO-A1-2020/226127
- WO-A1-2020/226127
- JP-A- 2006 314 989
- JP-A- 2009 144 599
- JP-A- 2017 533 093
- JP-A- H11 276 907
- US-A1- 2020 248 604
- US-A1- 2021 170 366

## Description

### TECHNICAL FIELD

The present invention relates to a catalyst body for purifying an exhaust gas from a gasoline engine. The present invention also relates to a gasoline engine exhaust gas purification system using the catalyst body for purifying an exhaust gas. This application claims the benefit of priority to Japanese Patent Application No. 2022-028512 filed on February 25, 2022.

### BACKGROUND ART

An exhaust gas emitted from a gasoline engine of an automobile or others contains harmful components such as hydrocarbon (HC), carbon monoxide (CO), and nitrogen oxide (NOx). To remove these harmful components from the exhaust gas effectively by reaction, exhaust gas purification catalysts have been employed to date.

In recent years, exhaust gas regulations have been increasingly strengthened, and there is a growing demand for reducing NH₃ emissions from gasoline engine vehicles. NH₃ is a component that can be generated by over-reduction of NOx with an exhaust gas purification catalyst. Regarding NH₃ removal, a selective catalytic reduction (SCR) technique using zeolite having NH₃ adsorbability has been known in the field of diesel engines (see, for example, Patent Documents 1 through 3). As zeolite having NH₃ adsorbability, metal-supported zeolite such as Cu-supported chabazite-type zeolite (Cu-CHA) is often used, as employed in an example of Patent Document 1.

In addition, in the field of gasoline engines, it is known that zeolite is used for catalyst bodies for purifying an exhaust gas (see, for example, Patent Documents 4 to7).

### CITATION LIST

### Patent Document

Patent Document 1: Japanese Patent Application Publication No. 2018-187631
Patent Document 2: Japanese Translation of PCT International Application Publication No. 2017-533093
Patent Document 3: Japanese Patent Application Publication No. 2011-24176
Patent Document 4: Japanese Patent Application Publication No. 2004-195327
Patent Document 5: Japanese Patent Application Publication No. H05-228370
Patent Document 6: US2017274321A1
Patent Document 7: US2020248604A1

### SUMMARY OF INVENTION

### Technical Problems

Through an intensive study, inventors of the present invention found that in a case where metal-supported zeolite such as Cu-CHA is used for an NH₃ adsorbent in order to reduce NH₃ emission from gasoline engine vehicles, NH₃ purification performance after endurance is insufficient for recent stricter exhaust gas regulations.

It is therefore an object of the present invention to provide a catalyst body for purifying an exhaust gas from a gasoline engine which exhibits high NH₃ purification performance after endurance.

### Solution to Problems

A catalyst body for purifying an exhaust gas from a gasoline engine disclosed here is configured to be disposed in an exhaust path of a gasoline engine, and the catalyst body for purifying an exhaust gas includes: a base material; an NH₃ adsorption layer containing zeolite; and a catalyst layer containing a catalytic noble metal. The NH₃ adsorption layer and the catalyst layer are stacked such that the NH₃ adsorption layer is located closer to the base material than the catalyst layer. The NH₃ adsorption layer includes a front portion and a rear portion, the front portion being located on an upstream side in an exhaust gas flow direction, a rear portion being located downstream of the front portion in the exhaust gas flow direction, when the catalyst body for purifying an exhaust gas is disposed in the exhaust path. The front portion contains metal-supported zeolite. The rear portion contains proton-type zeolite. The catalyst layer covers the front portion and the rear portion of the NH₃ adsorption layer.

In completing a catalyst body for purifying an exhaust gas from a gasoline engine disclosed here, the inventors of the present invention found the followings. Unlike diesel engines, in a gasoline engine, an operating environment temperature of the catalyst body for purifying an exhaust gas reaches about 350°C or more (typically about 350°C to about 600°C). Upon conducting a temperature-programmed desorption (TPD) analysis on Cu-CHA, which is a conventionally used NH₃ adsorbent, a desorption peak of NH₃ species by physical adsorption was observed at about 200°C, a desorption peak of NH₃ species adsorbed on a Lewis acid site was observed at about 350°C, and a desorption peak of NH₃ species adsorbed on a Bronsted acid site was observed at about 550°C. This adsorption site of Lewis acid site is an ion-exchanged site in zeolite, and serves as a primary adsorption site in metal-supported zeolite. Therefore, zeolite supporting a metal such as Cu cannot sufficiently adsorb and retain NH₃ in a temperature range from about 350°C or more.

In view of this, in the catalyst body for purifying an exhaust gas from a gasoline engine discloses here, an NH₃ adsorption layer includes a front portion containing metal zeolite and a rear portion containing a proton-type zeolite portion, and a catalyst layer containing a catalytic noble metal covers the front portion and the rear portion.

In the proton-type zeolite, a Bronsted acid site is a main adsorption site. Thus, in the temperature range from 350°C or more, the proton-type zeolite shows excellent NH₃ adsorption and holding performance. Accordingly, with this configuration, in a temperature range less than 350°C, in the front portion containing metal-supported zeolite, NH₃ is adsorbed and held, and in fuel cut (F/C), NH₃ is removed by selective catalytic reduction (SCR) reaction and noble metal catalytic reaction, and an exhaust gas can be thereby purified. In addition, in the temperature range from 350°C or more, in the rear portion containing proton-type zeolite, NH₃ is adsorbed and held, and in fuel cut, NH₃ is removed by noble metal catalytic reaction, and an exhaust gas can be thereby purified. As a result, the catalyst body for purifying an exhaust gas from a gasoline engine disclosed here can exhibit excellent NH₃ purification performance after endurance.

In one preferred aspect of the catalyst body for purifying an exhaust gas from a gasoline engine disclosed here, the metal-supported zeolite is chabazite-type zeolite supporting copper, and the proton-type zeolite is chabazite-type zeolite. Chabazite-type zeolite is especially suitable for removal of NH₃ by the catalyst body for purifying an exhaust gas, and is advantageous.

In one preferred aspect of the catalyst body for purifying an exhaust gas from a gasoline engine disclosed here, the catalyst layer contains Rh and at least one of Pd and Pt, as the catalytic noble metal. With this configuration, the catalyst body for purifying an exhaust gas shows especially high catalytic performance.

In one preferred aspect of the catalyst body for purifying an exhaust gas from a gasoline engine disclosed here, the catalyst layer has a multilayer structure including at least a first layer on a surface side and a second layer on a base material side, and the first layer contains Rh as the catalytic noble metal and the second layer contains Pd as the catalytic noble metal. This configuration can provide an exhaust gas purification system exhibiting especially high NH₃ purification performance after endurance.

In another aspect, an exhaust gas purification system for a gasoline engine disclosed here is configured to be disposed in an exhaust path of a gasoline engine, and the exhaust gas purification system includes an upstream catalyst converter including a first catalyst body, and a downstream catalyst converter including a second catalyst body. The first catalyst body contains a catalytic noble metal. The second catalyst body is the above-described catalyst body for purifying an exhaust gas. This configuration can provide an exhaust gas purification system exhibiting especially high NH₃ purification performance after endurance.

### BRIEF DESCRIPTION OF THE DRAWINGS

[FIG. 1] A schematic view illustrating an exhaust gas purification system according to a first embodiment.
[FIG. 2] A perspective view schematically illustrating a second catalyst body used in the exhaust gas purification system according to the first embodiment.
[FIG. 3] A partial cross-sectional view taken along a cylinder axis direction of an example of the second catalyst body illustrated in FIG. 2.
[FIG. 4] A partial cross-sectional view taken along a cylinder axis direction of another example of the second catalyst body illustrated in FIG. 2.
[FIG. 5] A partial cross-sectional view schematically illustrating a stacked structure of a first catalyst body used in the exhaust gas purification system according to the first embodiment.
[FIG. 6] A schematic view illustrating an exhaust gas purification system according to a second embodiment.
[FIG. 7] A schematic view illustrating an exhaust gas purification system according to a third embodiment.
[FIG. 8] A schematic view illustrating an exhaust gas purification system according to a fourth embodiment.
[FIG. 9] A schematic view illustrating an exhaust gas purification system according to a fifth embodiment.
[FIG. 10] A schematic view illustrating an exhaust gas purification system according to a sixth embodiment.
[FIG. 11] A schematic view illustrating an exhaust gas purification system according to a seventh embodiment.
[FIG. 12] A schematic view illustrating an exhaust gas purification system according to an eighth embodiment.
[FIG. 13] FIGS. 13A through 13H are schematic views illustrating layer structures of second catalyst bodies of exhaust gas purification systems of Examples 1 and 2 and Comparative Examples 1 through 6.
[FIG. 14] A graph showing NH₃ emissions after endurance of the exhaust gas purification systems of Examples 1 and 2 and Comparative Examples 1 through 6.
[FIG. 15] A graph showing NH₃ emissions after endurance of the exhaust gas purification systems of Examples 1 and 3 and Comparative Examples 5 and 6.
[FIG. 16] FIGS. 16A through 16E are schematic views illustrating layer structures of second catalyst bodies of exhaust gas purification systems of Example 4 and Comparative Examples 7 through 10.
[FIG. 17] A graph showing NH₃ emissions of the exhaust gas purification systems of Example 4 and Comparative Examples 7 through 10.

### DESCRIPTION OF PREFERRED EMBODIMENTS

Preferred embodiments of the present invention will be described hereinafter with reference to the drawings. Matters not specifically mentioned in the description but required for carrying out the present invention can be understood as matters of design of a person skilled in the art based on related art in the field. The present invention can be carried out on the basis of the contents disclosed in the description and common general knowledge in the field. In the drawings, members and parts having the same functions are denoted by the same reference characters, and description will not be repeated or will be simplified. Dimensional relationships (e.g., length, width, and thickness) in the drawings do not necessarily reflect actual dimensional relationships. The expression "A to B" (where A and B are any numerical values) representing a range herein includes "preferably greater than A" and "preferably less than B" as well as "A or more and B or less."

### FIRST EMBODIMENT

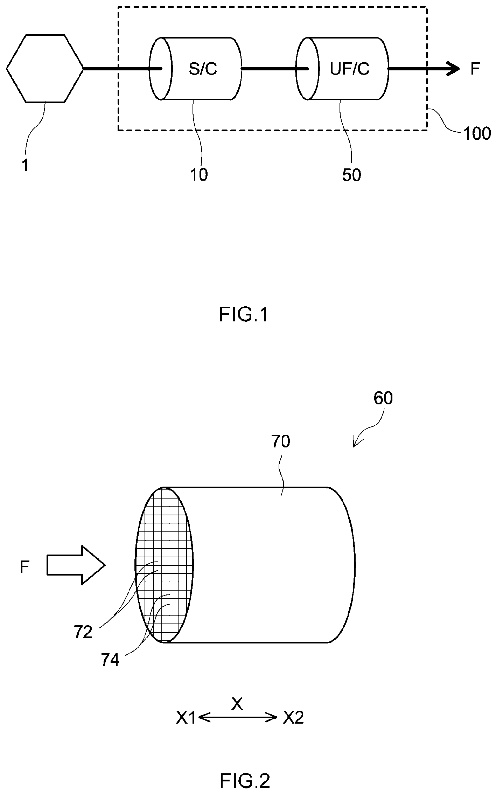

FIG. 1 is a schematic view of an exhaust gas purification system 100 according to a first embodiment using an example of a catalyst body for purifying an exhaust gas from a gasoline engine disclosed here. It should be noted that the "gasoline engine" herein is an engine that uses gasoline as fuel and burns an air-fuel mixture with an air-fuel ratio ranging from rich to lean, including the stoichiometric air-fuel ratio (air:gasoline = 14.7:1), and does not include lean-burn engines.

The exhaust gas purification system 100 is configured to be disposed in an exhaust path of a gasoline engine 1, and the exhaust gas purification system 100 is connected to the gasoline engine 1. Arrow F in FIG. 1 indicates a flow direction of an exhaust gas when the system 100 is disposed in the exhaust path. The exhaust gas purification system 100 includes an upstream catalyst converter 10 and a downstream catalyst converter 50. It should be noted that the terms "upstream" and "downstream" for the catalyst converters refer to a positional relationship in the flow direction of an exhaust gas. Thus, the downstream catalyst converter 50 is located downstream of the upstream catalyst converter 10 in an exhaust gas flow direction F in the exhaust path of the gasoline engine 1.

The upstream catalyst converter 10 includes a first catalyst body and a first housing accommodating the first catalyst body. The downstream catalyst converter 50 includes a second catalyst body and a second housing accommodating the second catalyst body. The first catalyst body is located upstream of the second catalyst body in the exhaust gas flow direction F. The first catalyst body is typically a startup catalyst (S/C) but is not limited to this. The second catalyst body is located downstream of the first catalyst body in the exhaust gas flow direction F. The second catalyst body is typically an underfloor catalyst (UF/C) but is not limited to this. The configurations of the first housing and the second housing may be the same or similar configurations as those used for a conventional startup catalyst and a conventional underfloor catalyst.

The first catalyst body and the second catalyst body will now be described in detail. The first catalyst body may have the same or similar configuration as that of a known catalyst body. On the other hand, the second catalyst body is a catalyst body for purifying an exhaust gas from a gasoline engine disclosed here. Therefore, the second catalyst body will be first described.

### <Second catalyst body>

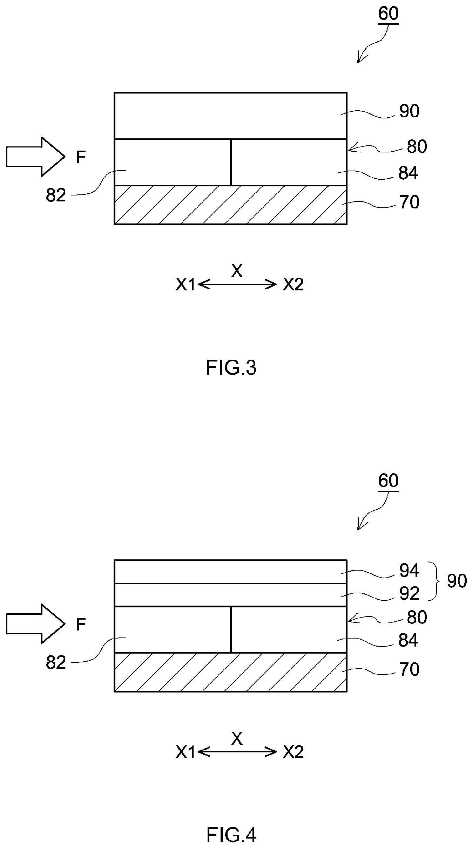

FIGS. 2 through 4 show examples of configurations of the second catalyst body. In particular, as shown in two examples of FIGS. 3 and 4, a second catalyst body 60 has a structure in which an NH₃ adsorption layer 80 and a second catalyst layer 90 are stacked on a second base material 70. Thus, the second catalyst body 60 includes the second base material 70, the NH₃ adsorption layer 80, and the second catalyst layer 90.

The second base material 70 constitutes a frame of the second catalyst body 60. The second base material 70 is not specifically limited, and may be any material and structure conventionally used for this type of application. The second base material 70 may be, for example, a ceramic substrate composed of ceramic such as cordierite, aluminum titanate, or silicon carbide, or may be a metal substrate composed of stainless steel (SUS), a Fe-Cr-Al-based alloy, or a Ni-Cr-Al-based alloy. As illustrated in FIG. 2, the second base material 70 has a honeycomb structure in this embodiment. The second base material 70 in the illustrated example is a straight flow-type base material, but may be a wall flow-type base material.

In the drawings, directions X are cylinder axis directions of the second base material 70, X1 denotes an upstream side in the exhaust gas flow direction F, and X2 denotes a downstream side in the exhaust gas flow direction. The second base material 70 includes a plurality of cells (cavities) 72 regularly arranged along the cylinder axis directions X, and partitions (ribs) 74 partitioning the plurality of cells 72. The volume of the second base material 70 (apparent volume including the volume of the cells 72) may be, but is not limited to, approximately 0.1 to 10 L, and 0.5 to 5 L, for example. The average length (overall length) L of the second base material 70 along the cylinder axis directions X may be approximately 10 to 500 mm, and 50 to 300 mm, for example.

The cells 72 serve as channels of an exhaust gas. The cells 72 extend along the cylinder axis directions X. The cells 72 are through holes penetrating the second base material 70 along the cylinder axis directions X. The shape, size, number, and so forth of each of the cells 72 may be designed in consideration of, for example, the flow rate and components of an exhaust gas flowing in the second catalyst body 60. The shape of a cross section of each cell 72 orthogonal to the cylinder axis directions X is not particularly limited. Examples of the cross-sectional shape of each cell 72 include quadrangles such as squares, parallelograms, rectangles, and trapezoids, other polygons (e.g., triangles, hexagons, and octagons), and various geometric shapes such as waveforms and circles. The partitions 74 face the cells 72 and partition adjacent cells 72. The average thickness (dimension orthogonal to the surface, the same hereinafter) of the partitions 74 may be, but is not limited to, approximately 0.1 to 10 mil. (where 1 mil. is about 25.4 µm), and 0.2 to 5 mil., for example, from the viewpoints of increasing mechanical strength, reducing a pressure loss, and the like. The partitions 74 may be porous to allow an exhaust gas to pass therethrough.

The NH₃ adsorption layer 80 and the second catalyst layer 90 are stacked on this second base material 70. At this time, as illustrated in FIG. 3, in the second catalyst body 60, the NH₃ adsorption layer 80 is located closer to the second base material 70 than (i.e., below) the second catalyst layer 90. Since the second catalyst layer 90 is located above the NH₃ adsorption layer 80, NH₃ can be efficiently removed.

The NH₃ adsorption layer 80 contains zeolite, and the zeolite functions as an NH₃ adsorbent. The NH₃ adsorption layer 80 includes a front portion 82 on an upstream side (X1 side in the drawing) in the exhaust gas flow direction F, and a rear portion 84 located downstream of the front portion 82 (X2 side in the drawing) in the exhaust gas flow direction F.

The front portion 82 contains metal-supported zeolite as zeolite. A main adsorption site of metal-supported zeolite is a Lewis acid site, which is a metal cation site, and at temperatures less than about 350°C, NH₃ can be adsorbed and held in this Lewis acid site. Thus, in the temperature range less than 350°C, NH₃ is adsorbed and held in the front portion 82 containing metal-supported zeolite, and at fuel cut, NH₃ is removed by a selective catalytic reduction (SCR) reaction using NO and O₂ and a noble metal catalytic reaction of the second catalyst layer 90, and exhaust gas can be thereby purified.

Here, in the gasoline engine, an operating environment temperature range of the catalyst body for purifying an exhaust gas includes a range from 350°C or more (typically about 350°C to about 600°C). Thus, in metal-supported zeolite, in the temperature range from 350°C or more, NH₃ is insufficiently adsorbed and held. In view of this, the rear portion 84 contains proton-type zeolite as zeolite. A main adsorption site of proton-type zeolite is a Bronsted acid site. Accordingly, in the temperature range from 350°C or more, NH₃ can be adsorbed and held in the Bronsted acid site, and thus, NH₃ excellent adsorption and holding performance can be obtained. Therefore, in the temperature range from 350°C or more, NH₃ is adsorbed and held in the rear portion 84 containing proton-type zeolite, and at fuel cut, NH₃ is removed by using O₂ and the catalytic noble metal of the second catalyst layer 90, and an exhaust gas can be thereby purified.

In this manner, the NH₃ adsorption layer 80 includes the front portion 82 containing metal-supported zeolite and the rear portion 84 containing proton-type zeolite, and the second catalyst layer 90 covers the front portion 82 and the rear portion 84, so that the second catalyst 60 can thereby exhibit excellent NH₃ purification performance after endurance.

Metal-supported zeolite used for the front portion 82 is typically ion-exchanged zeolite. Examples of metal-supported zeolite include transition metal-supported zeolite.

The transition metal supported by zeolite is at least one transition metal selected from the group consisting of V, Mn, Fe, Co, Ni, Cu, La, Ce, and Ag, preferably at least one transition metal selected from the group consisting of Fe, Cu, and Ag, more preferably Cu and/or Fe, even more preferably Cu. It should be noted that the expression "A and/or B" herein refers to "either A or B" and "both A and B."

Zeolite constituting a basic frame is typically aluminosilicate, but may be silico-aluminophosphate (SAPO). Zeolite preferably has pores of sizes suitable for adsorbing NH₃. Examples of zeolite structures expressed as codes defined by the International Zeolite Association (IZA) include AEI, AFX, AFT, AST, BEA, BEC, CHA, EAB, ETR, GME, ITE, KFI, LEV, PAU, SAS, SAT, SAV, THO, UFI, ATT, DDR, ERI, IFY, JST, LOV, LTA, OWE, RHO, RSN, SFW, TSC, UEI, and VSV. Among these, AEI, AFX, AFT, AST, BEA, BEC, CHA, EAB, ETR, GME, ITE, KFI, LEV, PAU, SAS, SAT, SAV, THO, and UFI are notable, and chabazite (CHA) is preferable.

From the viewpoint of NH₃ adsorbability, metal-supported zeolite is particularly preferably CHA-type zeolite supporting Cu (Cu-supported CHA zeolite).

For the foregoing reasons, the rear portion 84 contains proton-type zeolite. In addition, since charge-compensating cation species in proton-type zeolite is proton, as compared to a case where the entire NH₃ adsorption layer 80 is composed using metal-supported zeolite, degradation of NH₃ adsorbability due to elution of a metal derived from charge-compensating cations can be suppressed.

The term "proton-type zeolite" herein refers to zeolite in which at least a part (preferably more than 50%, more preferably 70% or more, even more preferably 90% or more, especially preferably all (100%)) of cation sites capable of performing ion exchange is occupied by proton (H⁺). Typically, proton-type zeolite is zeolite that can be obtained without ion exchange. Zeolite converted to proton-type zeolite in producing the NH₃ adsorption layer 80 may be used. For example, proton-type zeolite may be obtained by converting zeolite including ammonium ions (NH4⁺) as charge-compensating cation species to proton-type zeolite by firing in producing the NH₃ adsorption layer 80.

The type of proton-type zeolite is not particularly limited, and examples of proton-type zeolite include large-pore zeolite (i.e., zeolite with a maximum pore size of 12-numbered rings or larger), medium-pore zeolite (i.e., zeolite with a maximum pore size of 10-numbered rings), and small-pore zeolite (i.e., zeolite with a maximum pore size of 8-numbered rings).

Zeolite has a pore size on the molecular order, and has adsorption performance influenced by the pore size thereof, and NH₃ has a molecular size of 2.6 Å (angstroms: 0.26 nm). If the pore size of proton-type zeolite is large, proton-type zeolite adsorbs hydrocarbon as well as NH₃. Thus, by selecting the pore size of proton-type zeolite appropriately, NH₃ can be adsorbed more efficiently. From this point of view, as large-pore zeolite, BEA-type zeolite is preferable.

From the viewpoint of adsorbing NH₃ more efficiently, proton-type zeolite is preferably small-size zeolite (i.e., zeolite with a maximum pore size of 8-numbered rings), more preferably zeolite with a basic frame consisting essentially of 4-numbered rings, 6-numbered rings, and 8-numbered rings.

It should be noted that zeolite can have structural defects. In view of this, the expression "the basic frame of zeolite consists essentially of 4-numbered rings, 6-numbered rings, and 8-numbered rings" includes not only a case where the basis frame of zeolite consists only of 4-numbered rings, 6-numbered rings, and 8-numbered rings but also a case where the basic frame of zeolite includes other rings in addition to 4-numbered rings, 6-numbered rings, and 8-numbered rings because of structural defects caused by technical limitation or other reasons in fabrication without significantly inhibiting the effects of the present invention.

As an example of zeolite with a basic frame consisting essentially of 4-numbered rings, 6-numbered rings, and 8-numbered rings, chabazite-type zeolite (CHA-type zeolite) is used in this embodiment. The term "CHA-type zeolite" herein refers to zeolite having a crystal structure that is a CHA structure in an IUPAC structure code defined by the International Zeolite Association. CHA-type zeolite has a three-dimensional pores of oxygen 8-numbered rings with a size of 0.38 nm × 0.38 nm.

Examples of chabazite-type zeolite include SSZ-13, SSZ-62, LZ-218, Linde D, Linde R, and ZK-14, and among these, SSZ-13 is preferable.

Other examples of zeolite with a basic frame consisting essentially of 4-numbered rings, 6-numbered rings, and 8-numbered rings include ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SIV, THO, TSC, UEI, UFI, VNI, YUG, and ZON-type zeolites.

It should be noted that the crystal structure of zeolite can be confirmed by performing powder X-ray diffraction analysis. Specifically, a powder X-ray diffraction pattern of zeolite included in the NH₃ adsorption layer 80 is measured and compared with a powder X-ray diffraction pattern of zeolite having a known basic frame, thereby determining the crystal structure.

A SiO₂/Al₂O₃ ratio of proton-type zeolite is not particularly limited, and is, for example, 5 to 500, preferably 10 to 100.

Proton-type zeolite is particularly preferably CHA-type zeolite and BEA-type zeolite, and even more particularly preferably CHA-type zeolite. Thus, as an especially preferable combination in the NH₃ adsorption layer 80, Cu-supported CHA zeolite is used for the front portion 82, and CHA-type zeolite and/or BEA-type zeolite (especially CHA-type zeolite) is used for the rear portion 84.

The amount of metal-supported zeolite in the front portion 82 is not particularly limited. The amount of metal-supported zeolite in the front portion 82 is preferably 10 mass% or more from the viewpoint of higher NH₃ purification performance after endurance. In a case where atmosphere variation of an exhaust gas is small, an increase in the amount of metal-supported zeolite in the front portion 82 is advantageous for higher NH₃ purification performance after endurance. Thus, the amount of metal-supported zeolite in the front portion 82 can be 50 mass% or more, or 80 mass% or more.

It should be noted that the front portion 82 may contain zeolite other than metal-supported zeolite within a range that does not significantly inhibit the effects of the present invention (e.g., less than 10 mass%, preferably less than 5 mass%, more preferably less than 3 mass% of all the zeolite in the front portion 82). Especially preferably, the front portion 82 includes only metal-supported zeolite as zeolite.

Similarly, the amount of proton-type zeolite in the rear portion 84 is not particularly limited. The amount of proton-type zeolite in the NH₃ adsorption layer 80 is preferably 10 mass% or more from the viewpoint of higher NH₃ purification performance after endurance. In a case where atmosphere variation of an exhaust gas is large, the front portion 82 easily degrades. Thus, an increase in the amount of proton-type zeolite in the NH₃ adsorption layer 80 is advantageous for higher NH₃ purification performance after endurance. In view of this, the amount of proton-type zeolite in the NH₃ adsorption layer 80 can be 50 mass% or more, or 80 mass% or more.

It should be noted that the rear portion 84 may contain zeolite other than proton-type zeolite within a range that does not significantly inhibit the effects of the present invention (e.g., less than 10 mass%, preferably less than 5 mass%, more preferably less than 3 mass% of all the zeolite in the rear portion 84). Especially preferably, the rear portion 84 includes only proton-type zeolite as zeolite.

The NH₃ adsorption layer 80 can include a component other than zeolite, as an optional component. Examples of the optional component include an oxygen storage material (so-called OSC material) having oxygen absorbing/releasing capacity. As the OSC material, a compound known to have oxygen absorbing/releasing capacity may be used, and specific examples thereof include metal oxide containing ceria (CeO₂) (Ce-containing oxide). The Ce-containing oxide may be ceria or may be a composite oxide of ceria and a metal oxide other than ceria. From the viewpoint of enhancing heat resistance and durability, for example, the Ce-containing oxide may be a composite oxide including at least one of Zr and Al, for example, may be a ceria (CeO₂)-zirconia (ZrO₂) composite oxide (CZ composite oxide). From the viewpoint of enhancing heat resistance, for example, the CZ composite oxide may further include a rare earth metal oxide such as Nd₂O₃, La₂O₃, Y₂O₃, and Pr₆O₁₀.

In a case where the OSC material is a composite oxide including cerium oxide, from the viewpoint of sufficiently exhibiting oxygen absorbing/releasing capacity thereof, the content of cerium oxide is preferably 15 mass% or more, more preferably 20 mass% or more. On the other hand, if the content of cerium oxide is excessively large, basicity of the OSC material might increase excessively. Thus, the content of cerium oxide is preferably 60 mass% or less, more preferably 50 mass% or less.

The content of the OSC material in the NH₃ adsorption layer 80 is not particularly limited. The content of the OSC material in the NH₃ adsorption layer 80 is, for example, 10 mass% or more, preferably 20 mass% or more. On the other hand, the amount of the OSC material is, for example, 60 mass% or less, preferably 40 mass% or less.

The catalytic noble metal may be supported on the OSC material, or may be supported on a non-OSC material (e.g., alumina (Al₂O₃), titania (TiO₂), zirconia (ZrO₂), silica (SiO₂), etc.).

Yet other examples of the optional component of the NH₃ adsorption layer 80 include binders such as alumina sol and silica sol and various additives.

The coating amount (i.e., formation amount) of the NH₃ adsorption layer 80 is not particularly limited. The coating amount of the front portion 82 is, for example, 10 to 200 g/L and may be 100 to 200 g/L per 1 L of volume of a portion of the base material on which the front portion 82 is formed along the cylinder axis direction X. When the range described above is satisfied, enhancement of purification performance of harmful components and reduction of a pressure loss can be achieved at high level. In addition, durability and peeling resistance can be enhanced. The coating amount of the rear portion 84 is, for example, 3 to 200 g/L and may be 10 to 100 g/L per 1 L of volume of a portion of the base material on which the rear portion 84 is formed along the cylinder axis direction X. When the range described above is satisfied, enhancement of purification performance of harmful components and reduction of a pressure loss can be achieved at high level. In addition, durability and resistance to peeling can be enhanced.

The thickness of the NH₃ adsorption layer 80 is not particularly limited, and may be appropriately designed in consideration of durability, peeling resistance, and others. The thickness of the NH₃ adsorption layer 80 is, for example, 1 to 100 µm and may be 5 to 100 µm.

The coating width (average dimension in the cylinder axis direction X) of the NH₃ adsorption layer 80 is not particularly limited, and may be appropriately designed in consideration of the size of the second base material 70, a flow rate of an exhaust gas distributed in the second catalyst 60, and others. The coating width is, for example, 10% to 100%, preferably 20% to 100%, more preferably 30% to 100% of the overall length of the base material in the cylinder axis direction X.

A ratio between the coating width of the front portion and the coating width of the rear portion in the NH₃ adsorption layer 80 is not particularly limited, and the ratio (coating width of front portion:coating width of rear portion) is preferably 4:6 to 8:2, more preferably 4:6 to 7:3, even more preferably 4:6 to 6:4.

The second catalyst layer 90 contains a catalytic noble metal. The catalytic noble metal is generally supported on a substrate, and thus, the second catalyst layer 90 generally contains a three-way catalyst. The second catalyst layer 90 can have a configuration similar to that of a known catalyst layer containing a three-way catalyst.

The catalytic noble metal is a catalytic metal component that purifies harmful components in an exhaust gas. Examples of the catalytic noble metal include those exemplified for use in the NH₃ adsorption layer 80. The catalytic noble metal may be used alone and is preferably used in combination of two or more types. From the viewpoint of catalyst performance, the catalytic noble metal is preferably at least two types selected from the group consisting of Pt, Rh, Pd, Ir, and Ru, is more preferably a combination of Rh, which has high reduction activity, and at least one of Rh and Pd, which have high oxidation activity.

The catalytic noble metal is preferably used as fine particles with sufficiently small particle sizes. An average size of catalytic noble metal particles (specifically, an average of particle sizes of 20 or more noble metal particles determined based on a cross-sectional image of a catalyst layer taken with a transmission electron microscope) is generally about 1 to 15 nm, preferably 10 nm or less, more preferably 7 nm or less, even more preferably 5 nm or less. Accordingly to this, a contact area of the catalytic noble metal with an exhaust gas is increased, so that purification performance can be thereby further enhanced.

The amount of the catalytic noble metal in the second catalyst body 60 (total amount of the catalytic noble metal in the NH₃ adsorption layer 80 and the second catalyst layer 90) is not particularly limited, and can be appropriately determined depending on, for example, the type of the catalytic noble metal. From the viewpoint of especially high exhaust gas purification performance, the amount of the catalytic noble metal per 1 L of volume of the second base material 70 may be, for example, 0.01 g/L or more, 0.03 g/L or more, 0.05 g/L or more, 0.08 g/L or more, or 0.10 g/L or more. From the viewpoint of balance between exhaust gas purification performance and costs, this amount may be, for example, 5.00 g/L or less, 3.00 g/L or less, 2.00 g/L or less, 1.50 g/L or less, 1.00 g/L or less, 0.80 g/L or less, or 0.50 g/L or less.

It should be noted that the expression "per 1 L of volume of the base material" herein refers to per 1 L of bulk volume of the entire base material including a pure volume of the base material and a volume of a cell passage. The term (g/L) in the following description refers to an amount included in 1 L of volume of the base material.

The second catalyst layer 90 preferably contains an OSC material. Examples of the OSC material contained in the second catalyst layer 90 includes those exemplified as the OSC material usable for the NH₃ adsorption layer 80.

The OSC material may or may not support a catalytic noble metal. A part of the OSC material may support the catalytic noble metal with the other part of the OSC material supporting no catalytic noble metal.

The second catalyst layer 90 may further contain a non-OSC material (i.e., material having no oxygen absorbing/releasing capacity), and a catalytic noble metal may be supported on the non-OSC material. Examples of the non-OSC material include alumina (Al₂O₃), titania (TiO₂), zirconia (ZrO₂), and silica (SiO₂).

Thus, in the second catalyst layer 90, one or both of an OSC material and a non-OSC material is generally used as a substrate. The substrate preferably has a large specific surface area, and thus, more preferably, porous substrate particles are used. A specific surface area of the substrate particles determined by a BET method is preferably 5 to 200 m²/g (particularly 10 to 100 m²/g) from the viewpoint of heat resistance and structure stability.

The amount of the OSC material in the second catalyst layer 90 is, for example, 10 mass% or more, preferably 30 mass% or more, more preferably 40 mass% or more. The amount of the OSC material in the second catalyst layer 90 is, for example, less than 90 mass%, preferably less than 60 mass%, more preferably 50 mass% or less.

The amount of the non-OSC material in the second catalyst layer 90 is, for example, 10 mass% or more, preferably 30 mass% or more, more preferably 40 mass% or more. The amount of the non-OSC material in the second catalyst layer 90 is, for example, less than 90 mass%, preferably less than 70 mass%, more preferably less than 60 mass%.

The second catalyst layer 90 may further contain components not described above. For example, the second catalyst layer 90 may contain metal species such as an alkali metal element, an alkali earth metal element, a transition metal element, or a rare-earth element. These elements (especially alkaline earth element) may be contained in the form of oxide, hydroxide, carbonate, nitrate, sulfate, phosphate, acetate, formate, oxalate, halide, and so forth. In the second catalyst layer 90, the alkali earth metal element (especially Ba) and Pt and/or Pd preferably coexist.

Examples of other optional components of the second catalyst layer 90 include: binders such as alumina sol and silica sol; NOx adsorbents having NOx storage capacity; and various additives such as stabilizer.

The second catalyst layer 90 covers both the front portion 82 and the rear portion 84 of the NH₃ adsorption layer 80. In the illustrated example, the second catalyst layer 90 covers the entire front portion 82 and the entire rear portion 84 of the NH₃ adsorption layer 80. Alternatively, a portion of each of the front portion 82 and the rear portion 84 may not be covered with the second catalyst layer 90. The second catalyst layer covers preferably 85% or more, more preferably 90% or more, even more preferably 95% or more, still more preferably 100%, of the surface of the front portion 82 of the NH₃ adsorption layer 80. The second catalyst layer covers preferably 85% or more, more preferably 90% or more, even more preferably 95% or more, still more preferably 100% of the surface of the rear portion 84 of the NH₃ adsorption layer 80.

The second catalyst layer 90 may have a single-layer structure or a multilayer structure. In the example illustrated in FIG. 3, the second catalyst layer 90 is a single layer. In the case where the second catalyst layer 90 has the single-layer structure, the second catalyst layer 90 may be constituted by a plurality of regions having different compositions, properties, and so forth. For example, the second catalyst layer 90 may include a front portion located on an upstream side X1 and a rear portion located on a downstream side X2 of the front portion in the cylinder axis direction X, and composition and/or properties may be different between the front portion and the rear portion. Specifically, the front portion and the rear portion may contain different catalytic noble metals, for example.

In a case where the second catalyst layer 90 has a multilayer structure, the number of layers is not particularly limited. The second catalyst layer 90 may have a double-layer structure including a layer (lower layer) on a base material side and a layer (upper layer) on a surface side or may have a structure of three or more layers including a layer (lower layer) on a base material side, the layer (upper layer) on a surface side, and one or more intermediate layers located between the upper layer and the lower layer. In this multilayer structure, each of the layers may contain a different catalytic noble metal.

FIG. 4 shows an example in a case where the second catalyst layer 90 has a multilayer structure. In FIG. 4, the NH₃ adsorption layer 80 is located on the second base material 70, and the second catalyst layer 90 is located on the NH₃ adsorption layer 80.

The second catalyst layer 90 includes a lower layer portion 92 as a layer on a base material side and an upper layer portion 94 located on the lower layer portion 92. In the illustrated example, the upper layer portion 94 is also a layer on the exposed surface side (surface portion side) of the second catalyst layer 90. Each of the lower layer portion 92 and the upper layer portion 94 of the second catalyst layer 90 contains a catalytic noble metal. The lower layer portion 92 contains an oxidation catalyst such as Pd or Pt as a catalytic noble metal. On the other hand, the upper layer portion 94 contains a reduction catalyst such as Rh as a catalytic noble metal. In this case, the oxidation catalyst and the reduction catalyst are separated in the stacking direction and supported, so that degradation of the catalytic noble metals (e.g., sintering due to grain growth) is suppressed, and durability of the second catalyst body 60 can be further enhanced.

In a case where the lower layer portion 92 contains Pd as a catalytic noble metal and the upper layer portion 94 contains Rh as a catalytic noble metal, NH₃ purification performance of the second catalyst body 60 after endurance is especially high, which is thus advantageous.

The coating amount (i.e., formation amount) of the second catalyst layer 90 is not particularly limited. The coating amount is, for example, 10 to 500 g/L and may be 100 to 200 g/L per 1 L of volume of a portion of the base material on which the second catalyst layer 90 is formed along the cylinder axis direction X. When the range described above is satisfied, enhancement of purification performance of harmful components and reduction of a pressure loss can be achieved at high level. In addition, durability and resistance to peeling can be enhanced.

The thickness of the second catalyst layer 90 is not particularly limited, and may be appropriately designed in consideration of durability, peeling resistance, and others. The thickness of the second catalyst layer 90 is, for example, 1 to 100 µm and may be 5 to 100 µm.

The coating width (average dimension in the cylinder axis direction X) of the second catalyst layer 90 is not particularly limited, and may be appropriately designed in consideration of the size of the second base material 70, a flow rate of an exhaust gas distributed in the second catalyst body 60, and others. The coating width is, for example, 10% to 100%, preferably 20% to 100%, more preferably 30% to 100% of the overall length of the base material in the cylinder axis direction X.

The second catalyst body 60 may include a layer other than the NH₃ adsorption layer 80 and the second catalyst layer 90.

The second catalyst body 60 can be produced according to a known method. For example, a slurry for forming an NH₃ adsorption layer front portion which contains metal-supported zeolite, a solvent, and optional components (e.g., an OSC material, a catalytic noble metal source, a binder, etc.) is prepared. In addition, a slurry for forming an NH₃ adsorption layer rear portion which contains proton-type zeolite, a solvent, and optional components (e.g., an OSC material, a catalytic noble metal source, a binder, etc.) is prepared. Further, a slurry for forming a catalyst layer which contains a catalytic noble metal source, an OSC material, a non-OSC material when necessary, a solvent, and other optional components is prepared. The second base material 70 as illustrated in FIG. 2 is also prepared.

First, the slurry for forming an NH₃ adsorption layer front portion is applied by wash coating or other techniques from an end portion of the second base material 70 on an upstream side (X1 side) in the exhaust gas flow direction F to a predetermined inner position, and dried. Next, the slurry for forming an NH₃ adsorption layer rear portion is applied by wash coating or other techniques from an end of the second base material 70 on a downstream side (X2 side) in the exhaust gas flow direction F to the predetermined inner position, and dried. Thereafter, firing is performed, thereby forming the NH₃ adsorption layer 80 including the front portion 82 and the rear portion 84.

Then, the slurry for forming a catalyst layer is applied onto the resulting NH₃ adsorption layer 80 so as to cover the front portion 82 and the rear portion 84 of the NH₃ adsorption layer 80, dried when necessary, and then fired, thereby forming the second catalyst layer 90. In this manner, the second catalyst body 60 is obtained.

### <First catalyst body>

A first catalyst body 20 may have the same or similar structure as that of a startup catalyst of a known gasoline engine exhaust gas purification system including a startup catalyst (S/C) and an underfloor catalyst (UF/C).

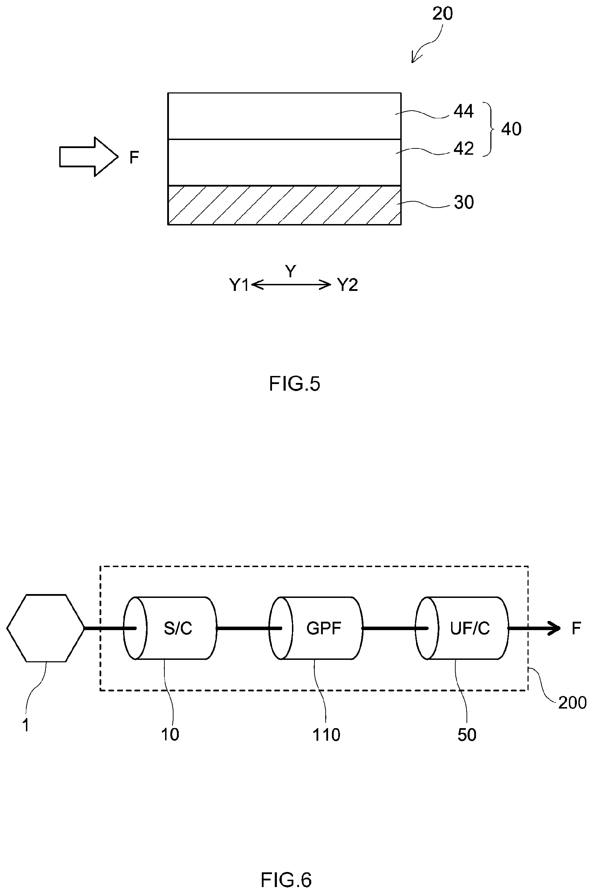

FIG. 5 illustrates an example of the first catalyst body 20. For example, the first catalyst body 20 includes a first base material 30 and a first catalyst layer 40. The first catalyst body 20 is typically disposed in the exhaust path of the gasoline engine 1 at a position near an exhaust manifold and an engine compartment (close-coupled (CC) position).

In the first embodiment, a straight flow-type base material is used for the first base material 30. However, the first base material 30 is not limited to this and may be a wall flow-type base material. For example, as described in embodiments below, the first catalyst body 20 may be configured as a catalyst-coating type gasoline particulate filter (GPF) by using a wall flow-type base material as the first base material 30.

The first base material 30 may be, for example, a ceramic substrate composed of ceramic such as cordierite, aluminum titanate, or silicon carbide, or may be a metal substrate composed of stainless steel (SUS), a Fe-Cr-Al-based alloy, or a Ni-Cr-Al-based alloy.

In the first embodiment, the first catalyst body 20 includes one first base material 30, but is not limited to this example. For example, as described in embodiments below, the first catalyst body 20 may be a tandem catalyst including a plurality of first base materials 30 on each of which the first catalyst layer 40 is provided. In the tandem catalyst, the first base materials 30 may be of the same type or different types. The first catalyst layers 40 may have the same composition or different compositions.

The first catalyst layer 40 contains a catalytic noble metal. The catalytic noble metal contained in the first catalyst layer 40 may be the same as or similar to the catalytic noble metal contained in the second catalyst layer 90 of the second catalyst body 60. The first catalyst layer 40 generally contains a substrate supporting a catalytic noble metal. The substrate contained in the first catalyst layer 40 may be the same as or similar to the substrate contained in the second catalyst layer 90 of the second catalyst body 60. Other components contained in the first catalyst layer 40 may be the same as or similar to those in the second catalyst layer 90 of the second catalyst body 60.

The first catalyst layer 40 may have a single-layer structure or a multilayer structure. In the case where the first catalyst layer 40 has the single-layer structure, the first catalyst layer 40 may be constituted by a plurality of regions having different compositions, properties, and so forth. For example, the first catalyst layer 40 may include a front portion located on an upstream side Y1 and a rear portion located on a downstream side Y2 in the cylinder axis direction X, and composition and/or properties may be different between the front portion and the rear portion. Specifically, the front portion and the rear portion may contain different noble metals, for example.

In a case where the first catalyst layer 40 has a multilayer structure, the number of layers is not particularly limited. The first catalyst layer 40 may have a double-layer structure including a layer (lower layer) on a base material side and a layer (upper layer) on a surface side or may have a structure of three or more layers including a layer (lower layer) on a base material side, the layer (upper layer) on a surface side, and one or more intermediate layers located between the upper layer and the lower layer. In this multilayer structure, the layers may contain different noble metals.

In the example illustrated in FIG. 5, the first catalyst layer 40 has a multilayer structure and includes a lower layer portion 42 on a base material side and an upper layer portion 44 on an exposed surface side. Each of the lower layer portion 42 and the upper layer portion 44 of the first catalyst layer 40 contains a catalytic noble metal. The lower layer portion 42 contains Pd as a catalytic noble metal. On the other hand, the upper layer portion 44 contains Rh as a catalytic noble metal. In this case, the oxidation catalyst and the reduction catalyst are separated in the stacking direction and supported, so that degradation of the catalytic noble metals (e.g., sintering due to grain growth) is suppressed, and durability of the first catalyst body 20 can be further enhanced.

The first catalyst body 20 can be produced according to a known method. For example, slurry containing a catalytic noble metal source, an OSC material, a non-OSC material, a solvent, and optional components is prepared. This slurry is applied onto the first base material 30 according to a known technique, dried as necessary, and then fired, thereby forming the first catalyst layer 40. In this manner, the first catalyst body 20 is obtained.

### <Exhaust Gas Purification System 100>

In the gasoline engine 1, an air-fuel mixture with an air-fuel ratio ranging from rich to lean, including the stoichiometric air-fuel ratio, is burnt. As illustrated in FIG. 1, first, an exhaust gas generated in the gasoline engine 1 is purified in the first catalyst body 20 of the upstream catalyst converter 10. The first catalyst body 20 contains a catalytic noble metal of a three-way catalyst, and NH₃ is generated in purifying NOx, and an exhaust gas including NH₃ flows out of the upstream catalyst converter 10.

The exhaust gas that has flowed out of the upstream catalyst converter 10 flows into the downstream catalyst converter 50. At this time, if the temperature in the downstream catalyst converter 50 is low and does not reach a catalyst activation temperature, NH₃ cannot be purified. In view of this, in the exhaust gas purification system 100, the second catalyst body 60 includes the NH₃ adsorption layer 80. Accordingly, NH₃ included in an exhaust gas is adsorbed in the NH₃ adsorption layer 80 included in the second catalyst body 60 of the downstream catalyst converter 50, and emission of NH₃ to the outside of the exhaust gas purification system 100 is suppressed. NH₃ adsorbed in the NH₃ adsorption layer 80 is purified in the second catalyst layer 90 at the timing of, for example, fuel cut (F/C).

Unlike diesel engines and lean-burn engines, in a gasoline engine, the temperature of an exhaust gas purification system reaches to about 350°C or more (e.g., about 350°C to about 600°C), and an atmosphere varies between rich and lean. As described above, in the temperature range less than 350°C, adsorption and holding of NH₃ can be performed by metal-supported zeolite in the front portion of the NH₃ adsorption layer 80 of the second catalyst body 60, whereas in the temperature range from about 350°C or more, adsorption and holding of NH₃ can be performed by proton-type zeolite in the front portion of the NH₃ adsorption layer 80 of the second catalyst body 60.

Thus, in the temperature range less than 350°C, NH₃ is adsorbed and held in the front portion 82, and at fuel cut, NH₃ is removed and the exhaust gas can be purified by selective contact reduction (SCR) reaction using NO and O₂ and noble metal catalytic reaction. In the temperature range from 350°C or more, NH₃ is adsorbed and held in the rear portion 84, and at fuel cut, NH₃ is removed and the exhaust gas can be purified by using O₂ and the catalytic noble metal of the second catalyst layer 90. Consequently, the second catalyst body 60 can exhibit excellent NH₃ purification performance after endurance for an exhaust gas of the gasoline engine.

### OTHER EMBODIMENTS

FIGS. 6 through 12 illustrate other embodiments. It should be noted that in the following embodiments, matters already described in the first embodiment will not be described again.

A gasoline engine exhaust gas purification system 200 according to the second embodiment illustrated in FIG. 6 is configured to be disposed in an exhaust path of a gasoline engine 1, and connected to the gasoline engine 1. The exhaust gas purification system 200 includes an upstream catalyst converter 10, a downstream catalyst converter 50, and a gasoline particulate filter (GPF) 110. The GPF 110 is located downstream of the upstream catalyst converter 10 and upstream of the downstream catalyst converter 50 in the exhaust gas flow direction F. That is, in the gasoline engine exhaust gas purification system 200 according to the second embodiment, the GPF 110 is added, between the upstream catalyst converter 10 and the downstream catalyst converter 50, to the gasoline engine exhaust gas purification system 100 according to the first embodiment. As the GPF 110, a known GPF used for a known gasoline engine exhaust gas purification system can be used.

With this configuration, particulate matter (PM) in an exhaust gas can be collected by the GPF. Thus, this configuration can provide a gasoline engine exhaust gas purification system having high NH₃ purification performance after endurance and reduced PM emission.

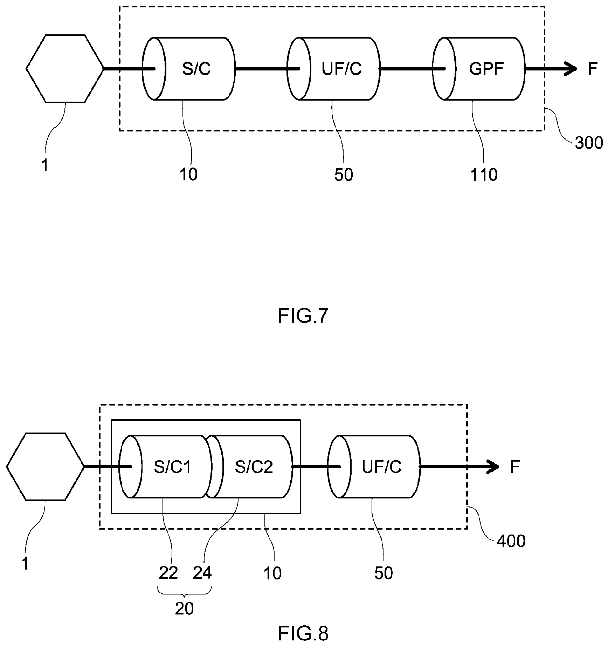

A gasoline engine exhaust gas purification system 300 according to a third embodiment illustrated in FIG. 7 includes a gasoline particulate filter (GPF) 110 in a manner similar to the second embodiment. However, the GPF 110 is located downstream of the downstream catalyst converter 50 in the exhaust gas flow direction F. That is, in the gasoline engine exhaust gas purification system 300 according to the third embodiment, the GPF 110 is added, downstream of the downstream catalyst converter 50, to the gasoline engine exhaust gas purification system 100 according to the first embodiment.

With this configuration, PM in an exhaust gas can be collected by the GPF. Thus, this configuration can provide a gasoline engine exhaust gas purification system having high NH₃ purification performance after endurance and reduced PM emission.

A gasoline engine exhaust gas purification system 400 according to a fourth embodiment illustrated in FIG. 8 is different from the gasoline engine exhaust gas purification system 100 according to the first embodiment in that a first catalyst body 20 of an upstream catalyst converter 10 is a tandem catalyst including an upstream side catalyst 22 and a downstream side catalyst 24. With this configuration, purification performance of the first catalyst body 20 can be further enhanced.

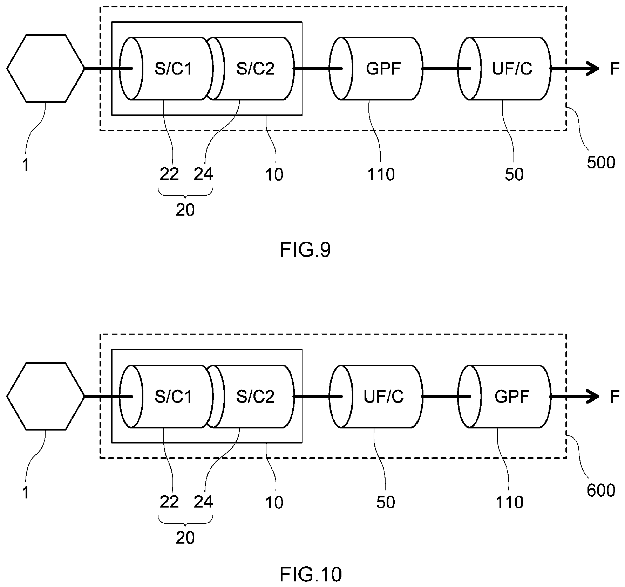

In a gasoline engine exhaust gas purification system 500 according to a fifth embodiment illustrated in FIG. 9, a first catalyst body 20 of an upstream catalyst converter 10 is a tandem catalyst including an upstream side catalyst 22 and a downstream side catalyst 24, and a GPF 110 is located downstream of the upstream catalyst converter 10 and upstream of a downstream catalyst converter 50 in an exhaust gas flow direction F. That is, in the gasoline engine exhaust gas purification system 500 according to the fifth embodiment, the GPF 110 is added, between the upstream catalyst converter 10 and the downstream catalyst converter 50, to the gasoline engine exhaust gas purification system 400 according to the fourth embodiment. With this configuration, PM in an exhaust gas can be efficiently collected with further enhancement of purification performance of the first catalyst body 20.

In a gasoline engine exhaust gas purification system 600 according to a sixth embodiment illustrated in FIG. 10, a first catalyst body 20 of an upstream catalyst converter 10 is a tandem catalyst including an upstream side catalyst 22 and a downstream side catalyst 24, and a GPF 110 is disposed downstream of a downstream catalyst converter 50 in an exhaust gas flow direction F. That is, in the gasoline engine exhaust gas purification system 600 according to the sixth embodiment, the GPF 110 is added, downstream of the downstream catalyst converter 50, to the gasoline engine exhaust gas purification system 400 according to the fourth embodiment. With this configuration, PM in an exhaust gas can be efficiently collected with further enhancement of purification performance of the first catalyst body 20.

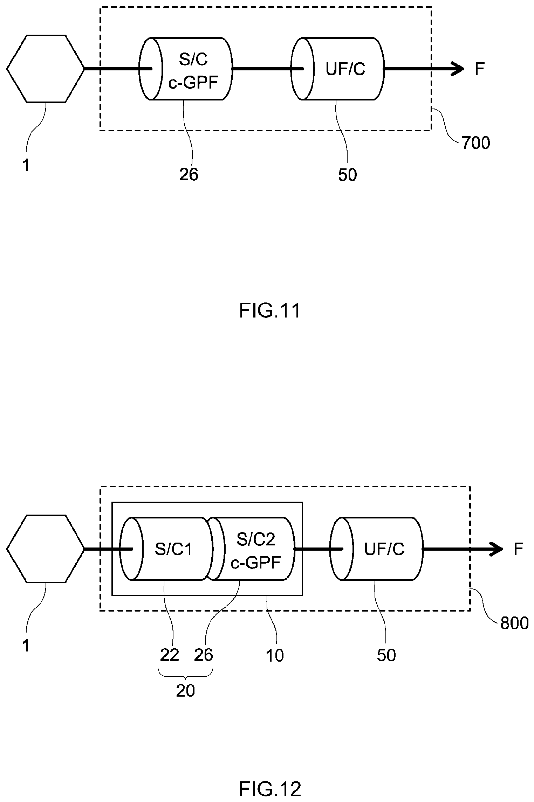

In a gasoline engine exhaust gas purification system 700 according to a seventh embodiment illustrated in FIG. 11, a wall flow-type base material is used as a base material of a first catalyst body 26 of an upstream catalyst converter 10, and the base material of the first catalyst body 26 serves as a GPF. With this configuration, PM in an exhaust gas can be collected by the GPF. Thus, this configuration can provide a gasoline engine exhaust gas purification system having high NH₃ purification performance after endurance and reduced PM emission.

In a gasoline engine exhaust gas purification system 800 according to an eighth embodiment illustrated in FIG. 12, a first catalyst body 20 of an upstream catalyst converter 10 is a tandem catalyst including an upstream side catalyst 22 and a downstream side catalyst 26. A wall flow-type base material is used as a base material of the downstream side catalyst 26, and the base material of the downstream side catalyst 26 serves as a GPF. With this configuration, PM in an exhaust gas can be efficiently collected with further enhancement of purification performance of the first catalyst body 20.

The embodiments in which the catalyst body for purifying an exhaust gas from a gasoline engine disclosed herein is used for the exhaust gas purification system have been described above. Alternatively, the catalyst body for purifying an exhaust gas from a gasoline engine disclosed here may be used alone. Alternatively, the catalyst body for purifying an exhaust gas from a gasoline engine disclosed here can be configured as a tandem catalyst which includes an upstream side catalyst including a base material and a catalyst layer containing a catalytic noble metal and a downstream side catalyst, and in which the downstream side catalyst is the catalyst body for purifying an exhaust gas from a gasoline engine disclosed here. The tandem catalyst can be housed in a housing of one catalyst converter.

### <Application of Gasoline Engine Exhaust Gas Purification System 100>

The gasoline engine exhaust gas purification system 100 is suitably applicable to purification of an exhaust gas from not only vehicles such as automobiles, trucks, and motorcycles but also ships and others. Among these, the gasoline engine exhaust gas purification system 100 is suitably applicable to vehicle such as automobiles and trucks including gasoline engines. Since the gasoline engine exhaust gas purification system 100 can efficiently adsorb and remove NH₃ in environments where a reducing gas can be present, the gasoline engine exhaust gas purification system 100 is also applicable to exhaust gas purification of H₂ engines, NH₃ engines, and e-Fuel engines.

Test examples of the present invention will be described below, but are not intended to limit the present invention thereto.

### Example 1

As a first base material, a honeycomb base material (made of cordierite, diameter: 117 mm, overall length: 100 mm, the number of cells per one square inch: 600 cpsi) was prepared. Palladium nitrate, CeO₂-ZrO₂-based composite oxide powder (OSC material), Al₂O₃ powder, barium sulfate, a binder, and ion-exchanged water were mixed, thereby preparing Pd-containing slurry. This Pd-containing slurry was poured into a first base material as lower layer slurry, and an unnecessary portion of the slurry was blown out by a blower, thereby coating a first base material surface with a material for forming a lower layer. The resultant is fired in an electric heating furnace, thereby forming a lower layer containing a Pd catalyst on the first base material.

Rhodium nitrate, CeO₂-ZrO₂-based composite oxide powder (OSC material), Al₂O₃ powder, a binder, and ion-exchanged water were mixed, thereby preparing Rh-containing slurry. This Rh-containing slurry was poured as upper layer slurry into a first base material provided with the lower layer, and an unnecessary portion of the slurry was blown out by a blower, thereby coating a surface of the lower layer on the base material with a material for forming an upper layer. The resultant was fired in an electric heating furnace, thereby forming an upper layer containing a Rh catalyst on the lower layer. In this manner, the first catalyst body was produced.

Next, the same honeycomb base material as the first base material was prepared as a second base material. Cu-supported CHA-type zeolite (Cu-CHA) as metal-supported zeolite, an alumina binder, and ion-exchanged water were mixed, thereby preparing Cu-supported zeolite-containing slurry. Proton-type CHA-type zeolite (H-CHA) as proton-type zeolite, an alumina binder, and ion-exchanged water were mixed, thereby preparing proton-type zeolite-containing slurry.

First, the Cu-supported zeolite-containing slurry was applied onto an upstream portion of the second base material corresponding to 50% of the overall length, and dried. Then, the proton-type zeolite-containing slurry was applied onto a downstream portion of the second base material corresponding to 50% of the overall length, and dried. The resultant was fired, thereby forming a lower layer including a front portion containing Cu-supported zeolite and a rear portion containing proton-type zeolite, on the second base material.

The Pd-containing slurry prepared as described above was poured as intermediate layer slurry into the second base material provided with the lower layer, and an unnecessary portion of the slurry was blown out by a blower, thereby coating a surface of the lower layer on the second base material with a material for forming an intermediate layer. The resultant was fired in an electric heating furnace, thereby forming an intermediate layer containing a Pd catalyst on the lower layer.

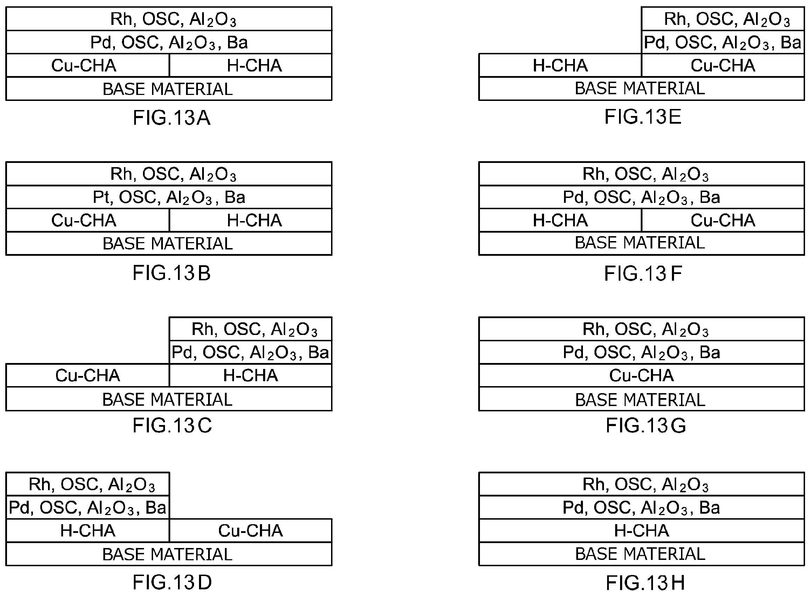

The Rh-containing slurry prepared as described above was poured as upper layer slurry into the second base material provided with the intermediate layer, and an unnecessary portion of the slurry was blown out by a blower, thereby coating a surface of the intermediate layer on the second base material with a material for forming an upper layer. The resultant was fired in an electric heating furnace, thereby forming an upper layer containing a Rh catalyst on the intermediate layer. In this manner, the second catalyst body was produced. The produced first and second catalyst bodies were combined to constitute an exhaust gas purification system of Example 1. FIG. 13A schematically illustrates a layer structure of the second catalyst body.

### Example 2

In a manner similar to Example 1, a first catalyst body was produced. Then, platinum nitrate, CeO₂-ZrO₂-based composite oxide powder (OSC material), Al₂O₃ powder, barium sulfate, a binder, and ion-exchanged water were mixed, thereby preparing Pt-containing slurry. A second catalyst body was produced in the same manner as Example 1 except that this Pt-containing slurry was used as intermediate layer slurry. The Pt amount in the second catalyst body of Example 2 was equal to the Pd amount in the second catalyst body of Example 1. The produced first and second catalyst bodies were combined to constitute an exhaust gas purification system of Example 2. FIG. 13B schematically illustrates a layer structure of the second catalyst body.

### Comparative Example 1

In a manner similar to Example 1, a first catalyst body was produced. In a manner similar to Example 1, a lower layer was formed on a second catalyst body. Pd-containing slurry was applied onto a downstream portion of the second base material corresponding to 50% of the overall length, dried, and fired, thereby forming an intermediate layer on a rear portion of the lower layer. The coating amount of each component of the intermediate layer was equal to the coating amount of each component of the intermediate layer of Example 1. Rh-containing slurry was applied onto a downstream portion of the second base material corresponding to 50% of the overall length, dried, and fired, thereby forming an upper layer on the intermediate layer. The coating amount of each component of the upper layer was equal to the coating amount of each component of the upper layer of Example 1. In this manner, the second catalyst body was obtained. The produced first and second catalyst bodies were combined to constitute an exhaust gas purification system of Comparative Example 1. FIG. 13C schematically illustrates a layer structure of the second catalyst body.

### Comparative Example 2

In a manner similar to Example 1, a first catalyst body was produced. The same honeycomb base material as the first base material was prepared as a second base material. First, the proton-type zeolite-containing slurry was applied onto an upstream portion of the second base material corresponding to 50% of the overall length, and dried. Next, the Cu-supported zeolite-containing slurry was applied onto a downstream portion of the second base material corresponding to 50% of the overall length, and dried. The resultant was fired, thereby forming a lower layer including a front portion containing proton-type zeolite and a rear portion containing Cu-supported zeolite, on the second base material.

Pd-containing slurry was applied onto an upstream portion of the second base material corresponding to 50% of the overall length, dried, and fired, thereby forming an intermediate layer on a front portion of the lower layer. The coating amount of each component of the intermediate layer was equal to the coating amount of each component of the intermediate layer of Example 1. Then, Rh-containing slurry was applied onto an upstream portion of the second base material corresponding to 50% of the overall length, dried, and fired, thereby forming an upper layer on the intermediate layer. The coating amount of each component of the upper layer was equal to the coating amount of each component of the upper layer of Example 1. In this manner, the second catalyst body was produced. The produced first and second catalyst bodies were combined to constitute an exhaust gas purification system of Comparative Example 2. FIG. 13D schematically illustrates a layer structure of the second catalyst body.

### Comparative Example 3

In a manner similar to Example 1, a first catalyst body was produced. A second catalyst body was produced in a manner similar to Comparative Example 2 except that an intermediate layer was formed on a rear portion of a lower layer using Pd-containing slurry and an upper layer was formed on the intermediate layer using Rh-containing slurry. The produced first and second catalyst bodies were combined to constitute an exhaust gas purification system of Comparative Example 3. FIG. 13E schematically illustrates a layer structure of the second catalyst body.

### Comparative Example 4

In a manner similar to Example 1, a first catalyst body was produced. A second catalyst body was produced in a manner similar to Example 1 except that proton-type zeolite-containing slurry was applied onto an upstream portion of a second base material corresponding to 50% of the overall length and Cu-supported zeolite-containing slurry was applied onto a downstream portion of the second base material corresponding to 50% of the overall length. The produced first and second catalyst bodies were combined to constitute an exhaust gas purification system of Comparative Example 4. FIG. 13F schematically illustrates a layer structure of the second catalyst body.

### Comparative Example 5

In a manner similar to Example 1, a first catalyst body was produced. A second catalyst body was produced in a manner similar to Example 1 except that Cu-supported zeolite-containing slurry was applied onto the second base material across the overall length. The produced first and second catalyst bodies were combined to constitute an exhaust gas purification system of Comparative Example 5. FIG. 13G schematically illustrates a layer structure of the second catalyst body.

### Comparative Example 6

In a manner similar to Example 1, a first catalyst body was produced. A second catalyst body was produced in a manner similar to Example 1 except that proton-type zeolite-containing slurry was applied onto the second base material across the overall length. The produced first and second catalyst bodies were combined to constitute an exhaust gas purification system of Comparative Example 6. FIG. 13H schematically illustrates a layer structure of the second catalyst body.

### [Endurance Treatment]

The exhaust gas purification systems of Examples 1 and 2 and Comparative Examples 1 through 6 were attached to an exhaust system of a V-8 gasoline engine. At this time, in the exhaust system, the first catalyst body was located on an upstream side in the flow direction of an exhaust gas. With an inflow gas temperature set at 950°C, exhaust gases in rich, stoichiometric, and lean conditions were repeatedly supplied each for a predetermined time to the exhaust gas purification system over 50 hours. Thereby, the first catalyst body was subjected to an endurance treatment at 1000°C, and the second catalyst body was subjected to an endurance treatment at 700°C.

### [Measurement of NH₃ Emission]

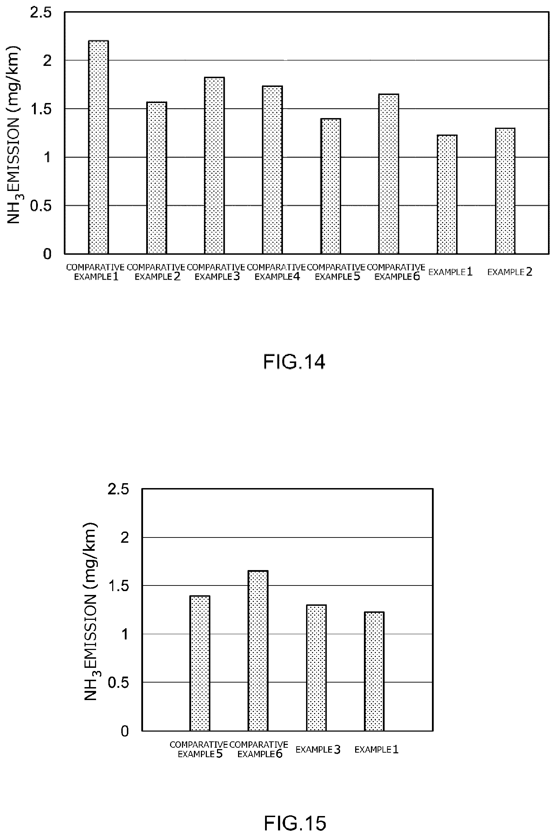

The exhaust gas purification systems of Examples 1 and 2 and Comparative Examples 1 through 6 subjected to the endurance treatment were mounted on vehicles including gasoline engines. At this time, the first catalyst body housed in the housing was attached at a startup catalyst position, and the second catalyst body housed in the housing was attached at an underfloor position. A FT-IR analyzer was attached to a downstream side of the second catalyst body. This vehicle was driven according to a WLTC mode on a chassis dynamometer, and an ammonia concentration included in an exhaust gas was measured, thereby obtaining an NH₃ emission. FIG. 14 show results.

As shown in the results shown in FIG. 14, in a case where the NH₃ adsorption layer includes a front portion containing metal-supported zeolite and a rear portion containing proton-type zeolite and the second catalyst layer covers the front portion and the rear portion, NH₃ emission after endurance can be significantly reduced.

Specifically, Comparative Example 1 is a comparative example in which the front portion is not covered with the second catalyst layer. A comparison between Example 1 and Comparative Example 1 shows that coverage of both the front portion and the rear portion with the second catalyst layer significantly reduces NH₃ emission after endurance.

Comparative Examples 2 through 4 are comparative examples in which the positions of the front portion and the rear portion of the NH₃ adsorption layer were switched, that is, comparative examples in which the front portion contained proton-type zeolite and the rear portion contained metal-supported zeolite. In addition, in Comparative Example 2, the rear portion was not covered with the second catalyst layer, and in Comparative Example 3, the front portion was not covered with the second catalyst layer. Comparative Examples 5 and 6 are comparative examples in which only one type of zeolite was used in the NH₃ adsorption layer. A comparison between Example 1 and Comparative Examples 2 through 6 shows that the presence of metal-supported zeolite in the front portion and the presence of proton-type zeolite in the rear portion significantly reduce NH₃ emission after endurance.

Example 2 is an example in which the catalytic noble metal of the catalyst layer of the second catalyst body was changed to Pt. A comparison between Example 1 and Example 2 shows that with a combination in which Pd is used in the lower layer portion and Rh is used in the upper layer portion, the catalytic noble metals in the catalyst layers obtain higher NH₃ purification performance after endurance.

### Example 3: Change of ratio of front portion and rear portion of NH₃ adsorption layer.

In a manner similar to Example 1, a first catalyst body was produced. A second catalyst body was produced in a manner similar to Example 1 except that Cu-supported zeolite-containing slurry was applied onto an upstream portion of a second base material corresponding to 80% of the overall length and proton-type zeolite-containing slurry was applied onto a downstream portion of the second base material corresponding to 20% of the overall length. The produced first and second catalyst bodies were combined to constitute an exhaust gas purification system of Example 3.

The endurance treatment and the measurement of NH₃ emission described above were conducted on the exhaust gas purification system of Example 3. FIG. 15 shows the results together with the results of Example 1 and Comparative Examples 5 and 6. As shown in the results of FIG. 15, even when the ratio of the front portion and the rear portion in the NH₃ adsorption layer is changed, NH₃ emission after endurance can also be significantly reduced.

### Example 4: Change of proton-type zeolite species

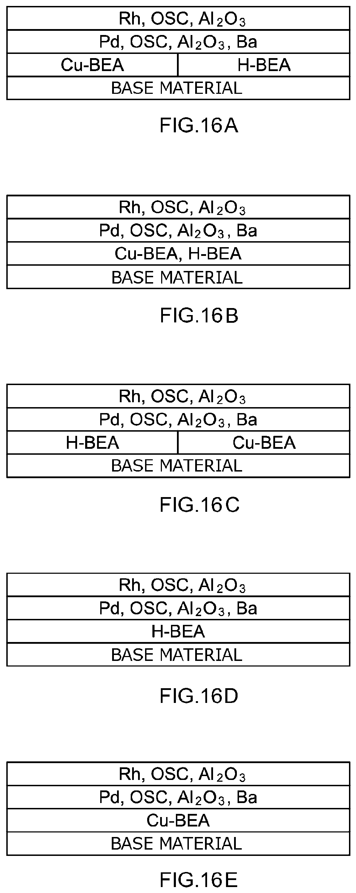

An exhaust gas purification system of Example 4 was configured in a manner similar to Example 1 except that a second catalyst body was produced by using Cu-supported BEA-type zeolite (Cu-BEA) instead of Cu-supported CHA-type zeolite (Cu-CHA) and using proton-type BEA-type zeolite (H-BEA) instead of proton-type CHA-type zeolite (H-CHA). FIG. 16A schematically illustrates a layer structure of the second catalyst body.

### Comparative Example 7

In a manner similar to Example 1, a first catalyst body was produced. Then, Cu-supported BEA-type zeolite (Cu-BEA) as metal-supported zeolite, proton-type BEA-type zeolite (H-BEA), an alumina binder, and ion-exchanged water were mixed, thereby preparing mixed zeolite-containing slurry. A second catalyst body was produced in a manner similar to Example 1 except that the mixed zeolite-containing slurry was applied onto the second base material across the overall length. The produced first and second catalyst bodies were combined to constitute an exhaust gas purification system of Comparative Example 7. FIG. 16B schematically illustrates a layer structure of the second catalyst body.

### Comparative Example 8

An exhaust gas purification system of Comparative Example 8 was configured in a manner similar to Comparative Example 4 except that a second catalyst body was produced by using Cu-supported BEA-type zeolite (Cu-BEA) instead of Cu-supported CHA-type zeolite (Cu-CHA) and using proton-type BEA-type zeolite instead of proton-type CHA-type zeolite (H-CHA). FIG. 16C schematically illustrates a layer structure of the second catalyst body.

### Comparative Example 9

An exhaust gas purification system of Comparative Example 9 was configured in a manner similar to Comparative Example 6 except that a second catalyst body was produced by using proton-type BEA-type zeolite instead of proton-type CHA-type zeolite (H-CHA). FIG. 16D schematically illustrates a layer structure of the second catalyst body.

### Comparative Example 10

An exhaust gas purification system of Comparative Example 10 was configured in a manner similar to Comparative Example 5 except that a second catalyst body was produced by using Cu-supported BEA-type zeolite (Cu-BEA) instead of Cu-supported CHA-type zeolite (Cu-CHA). FIG. 16E schematically illustrates a layer structure of the second catalyst body.

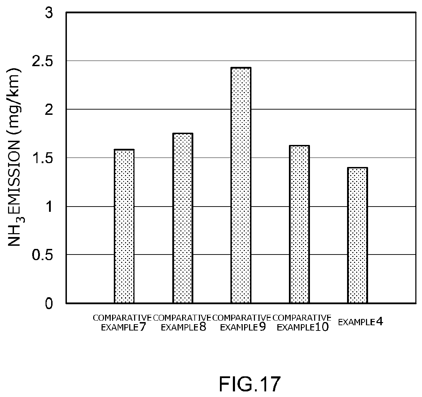

The endurance treatment and the measurement of NH₃ emission described above were conducted on the exhaust gas purification systems of Example 4 and Comparative Examples 7 through 10. FIG. 17 shows measurement results. The results shown in FIGS. 14 and 17 show that even when the type of the basic frame of zeolite is changed, the effect of reducing NH₃ emission after endurance can be still obtained.

For the foregoing reasons, it can be understood that the catalyst body for purifying an exhaust gas from a gasoline engine and the gasoline engine exhaust gas purification system disclosed here show high NH₃ purification performance after endurance.

Some embodiments of the present invention have been described, but the embodiments are merely examples. The present invention can be carried out in other various modes. The present invention can be carried out on the basis of the contents disclosed in the description and common general knowledge in the field. The techniques described in claims include various modifications and changes of the above exemplified embodiments. For example, the embodiments described above may be partially replaced with another embodiment, and another modified embodiment may be added to the embodiments described above. It may also be deleted as appropriate if the technical features of the embodiments are not described as essential.

## Claims

1. A catalyst body (60) for purifying an exhaust gas from a gasoline engine (1), configured to be disposed in an exhaust path of a gasoline engine (1), the catalyst body for purifying an exhaust gas comprising:
a base material (70);
an NH₃ adsorption layer (80) containing zeolite; and
a catalyst layer (90) containing a catalytic noble metal, wherein
the NH₃ adsorption layer (80) and the catalyst layer (90) are stacked such that the NH₃ adsorption layer (80) is located closer to the base material (70) than the catalyst layer (90),
the NH₃ adsorption layer (80) includes a front portion (82) and a rear portion (84), the front portion (82) being located on an upstream side in an exhaust gas flow direction, a rear portion (84) being located downstream of the front portion (82) in the exhaust gas flow direction, when the catalyst body (60) for purifying an exhaust gas is disposed in the exhaust path,
the front portion (82) contains metal-supported zeolite,
the rear portion (84) contains proton-type zeolite, and
the catalyst layer (90) covers the front portion (82) and the rear portion (84) of the NH₃ adsorption layer.

2. The catalyst body (60) for purifying an exhaust gas according to claim 1, wherein
the metal-supported zeolite is chabazite-type zeolite supporting copper, and
the proton-type zeolite is chabazite-type zeolite.

3. The catalyst body (60) for purifying an exhaust gas according to claim 1 or 2, wherein the catalyst layer (90) contains Rh and at least one of Pd and Pt, as the catalytic noble metal.

4. The catalyst body (60) for purifying an exhaust gas according to any one of claims 1 to 3, wherein
the catalyst layer (90) has a multilayer structure including at least a first layer (94) on a surface side and a second layer (92) on a base material side, and
the first layer contains (94) Rh as the catalytic noble metal and the second layer (92) contains Pd as the catalytic noble metal.

5. A gasoline engine exhaust gas purification system (100, 200, 300, 400, 500, 600, 700, 800) configured to be disposed in an exhaust path of a gasoline engine (1), the exhaust gas purification system (100, 200, 300, 400, 500, 600, 700, 800) comprising:
an upstream catalyst converter (10) including a first catalyst body (20, 26); and
a downstream catalyst converter (50) including a second catalyst body (60), wherein
the first catalyst body (20, 26) contains a catalytic noble metal, and
the second catalyst body (60) is the catalyst body (60) for purifying an exhaust gas according any one of claims 1 to 4.

## Patentansprüche

1. Katalysatorkörper (60) zum Reinigen eines Abgases eines Benzinmotors (1), der dazu konfiguriert ist, in einem Abgasweg eines Benzinmotors (1) angeordnet zu sein, welcher Katalysatorkörper zum Reinigen eines Abgases
ein Basismaterial (70),
eine NH₃-Adsorptionsschicht (80), die Zeolith enthält, und
eine Katalysatorschicht (90), die ein katalytisches Edelmetall enthält, aufweist, bei dem die NH₃-Adsorptionsschicht (80) und die Katalysatorschicht (90) so geschichtet sind, dass die NH₃-Adsorptionsschicht (80) näher an dem Basismaterial (70) angeordnet ist als die Katalysatorschicht (90),
die NH₃-Adsorptionsschicht (80) einen vorderen Abschnitt (82) und einen hinteren Abschnitt (84) aufweist, welcher vordere Abschnitt (82) auf einer stromaufwärtigen Seite in einer Abgasströmungsrichtung angeordnet ist, welcher hintere Abschnitt (84) stromabwärts des vorderen Abschnitts (82) in der Abgasströmungsrichtung angeordnet ist, wenn der Katalysatorkörper (60) zum Reinigen eines Abgases in dem Abgasweg angeordnet ist,
der vordere Abschnitt (82) Metall tragender Zeolith enthält,
der hintere Abschnitt (84) Proton-Typ Zeolith enthält, und
die Katalysatorschicht (90) den vorderen Abschnitt (82) und den hinteren Abschnitt (84) der NH₃-Adsorptionsschicht bedeckt.

2. Katalysatorkörper (60) zum Reinigen eines Abgases nach Anspruch 1, bei dem
der Metall tragende Zeolith Kupfer tragender Chabasit-Typ Zeolith ist, und
der Proton-Typ Zeolith Chabasit-Typ Zeolith ist.

3. Katalysatorkörper (60) zum Reinigen eines Abgases nach Anspruch 1 oder 2, bei dem die Katalysatorschicht (90) Rh und mindestens eins von Pd und Pt als das katalytische Edelmetall enthält.

4. Katalysatorkörper (60) zum Reinigen eines Abgases nach einem der Ansprüche 1 bis 3, bei dem
die Katalysatorschicht (90) eine Mehrschichtstruktur aufweist, die mindestens eine erste Schicht (94) auf einer Oberflächenseite und eine zweite Schicht (92) auf einer Basismaterialseite aufweist, und
die erste Schicht (94) Rh als das katalytische Edelmetall enthält und die zweite Schicht (92) Pd als das katalytische Edelmetall enthält.

5. Benzinmotorabgasreinigungssystem (100, 200, 300, 400, 500, 600, 700, 800), das dazu konfiguriert ist, in einem Abgasweg eines Benzinmotors (1) angeordnet zu sein, welches Abgasreinigungssystem (100, 200, 300, 400, 500, 600, 700, 800)
einen stromaufwärtigen Katalysator (10), der einen ersten Katalysatorkörper (20, 26) aufweist; und
einen stromabwärtigen Katalysator (50), der einen zweiten Katalysatorkörper (60) aufweist, aufweist, bei dem
der erste Katalysatorkörper (20, 26) ein katalytisches Edelmetall enthält, und
der zweite Katalysatorkörper (60) der Katalysatorkörper (60) zum Reinigen eines Abgases nach einem der Ansprüche 1 bis 4 ist.

## Revendications

1. Corps de catalyseur (60) pour purifier un gaz d'échappement d'un moteur à essence (1), configuré pour être disposé dans un trajet d'échappement d'un moteur à essence (1), le corps de catalyseur pour purifier un gaz d'échappement comprenant :
un matériau de base (70) ;
une couche d'adsorption de NH₃ (80) contenant de la zéolite ; et
une couche de catalyseur (90) contenant un métal noble catalytique, dans lequel
la couche d'adsorption de NH₃ (80) et la couche de catalyseur (90) sont empilées de telle sorte que la couche d'adsorption de NH₃ (80) est située plus près du matériau de base (70) que la couche de catalyseur (90),
la couche d'adsorption de NH₃ (80) comprend une partie avant (82) et une partie arrière (84), la partie avant (82) étant située du côté amont dans une direction d'écoulement de gaz d'échappement, une partie arrière (84) étant située en aval de la partie avant (82) dans la direction d'écoulement de gaz d'échappement, lorsque le corps de catalyseur (60) pour purifier un gaz d'échappement est disposé dans le trajet d'échappement,
la partie avant (82) contient de la zéolite à support métallique,
la partie arrière (84) contient une zéolite de type protonique, et
la couche de catalyseur (90) recouvre la partie avant (82) et la partie arrière (84) de la couche d'adsorption de NH₃.

2. Corps de catalyseur (60) pour purifier un gaz d'échappement selon la revendication 1, dans lequel
la zéolite à support métallique est une zéolite de type chabazite supportant du cuivre, et
la zéolite de type proton est une zéolite de type chabazite.

3. Corps de catalyseur (60) pour purifier un gaz d'échappement selon la revendication 1 ou 2, dans lequel la couche de catalyseur (90) contient du Rh et au moins un des élément parmi le Pd et Pt, en tant que métal noble catalytique.

4. Corps de catalyseur (60) pour purifier un gaz d'échappement selon l'une quelconque des revendications 1 à 3, dans lequel
la couche de catalyseur (90) a une structure multicouche comprenant au moins une première couche (94) du côté de surface et une deuxième couche (92) du côté de matériau de base, et
la première couche contient (94) du Rh comme métal noble catalytique et la deuxième couche (92) contient du Pd comme métal noble catalytique.

5. Système de purification de gaz d'échappement de moteur à essence (100, 200, 300, 400, 500, 600, 700, 800) configuré pour être placé dans un trajet d'échappement d'un moteur à essence (1), le système de purification de gaz d'échappement (100, 200, 300, 400, 500, 600, 700, 800) comprenant :
un convertisseur catalytique en amont (10) comprenant un premier corps de catalyseur (20, 26) ; et
un convertisseur catalytique en aval (50) comprenant un deuxième corps de catalyseur (60), dans lequel
le premier corps de catalyseur (20, 26) contient un métal noble catalytique, et
le deuxième corps de catalyseur (60) est le corps de catalyseur (60) pour purifier un gaz d'échappement selon l'une quelconque des revendications 1 à 4.
